# EUROPEAN PATENT APPLICATION

(11) **EP 4 349 879 A1**
(43) Date of publication of application: **10.04.2024**
(21) Application number: 22811282.7
(22) Date of filing: 23.05.2022
(51) Int. Cl.: C08G 18/64, C08G 18/40, C08G 101/00

(54) **CURABLE COMPOSITION, POLYURETHANE RESIN COMPOSITION, AND POLYURETHANE MOLDED BODY**

(30) Priority: 24.05.2021 JP 2021087098
(71) Applicant: Idemitsu Kosan Co.,Ltd., Tokyo 100-8321 (JP)
(72) Inventor: MIYAGAWA, Toshifumi, Tokyo 100-8321 (JP); KOYAMA, Yoshihito, Tokyo 100-8321 (JP)
(74) Representative: Gille Hrabal Partnerschaftsgesellschaft mbB Patentanwälte
(86) International application number: PCT/JP2022/021102
(87) International publication number: WO 2022/250012

(57) **Abstract**

A thermosetting composition comprising a lignin component comprising two or more kinds of compounds represented by the following formula (1) and a polyol, wherein the amount of the lignin component is 0.1% by mass or more, and the total content of the compound is 0.06% by mass or more, based on the total amount of the lignin component: 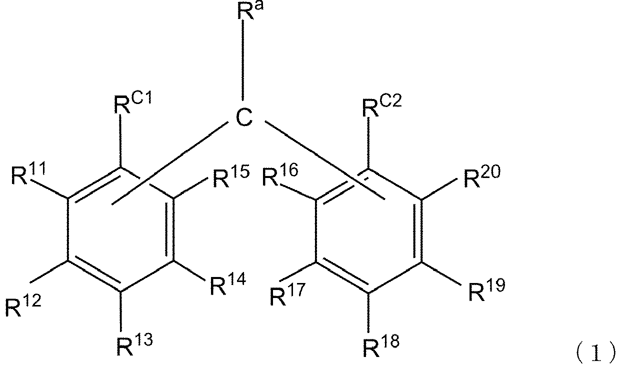 wherein in the formula, R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.

## Description

### Technical Field

The present invention relates to a thermosetting composition used for producing a polyurethane, and a polyurethane molded body produced using the thermosetting composition.

### Background Art

In recent years, from the viewpoint of reducing the environmental load, attempts have been made to replace some of the traditionally used petroleum-derived polyol component with a biomass-derived component as a polyol component used for producing polyurethane.

Among them, lignin is relatively excellent in flame retardancy, and can increase mechanical strength, so that lignin has attracted attention as a component used in the production of polyurethane (see, for example, Patent Documents 1 and 2).

### Related Art Documents

### Patent Documents

[Patent Document 1] JP 2013-170245 A
[Patent Document 2] JP 2017-537194 A

### Summary of the Invention

However, lignin generally has low solubility in polyol components and is difficult to dissolve in polyol used in the production of a rigid polyurethane molded body such as polypropylene glycol and polyester polyol. Therefore, when the amount of lignin of a rigid polyurethane resin is large, insoluble components tend to be unevenly distributed in the rigid polyurethane resin, and a stable molded body may not be obtained. For this reason, the amount of lignin in a rigid polyurethane resin needs to be kept below a certain amount, and only a small portion of the petroleum-derived polyol component can usually be replaced by lignin in a rigid polyurethane resin. Therefore, lignin does not necessarily contribute sufficiently to stable production of rigid polyurethane resin.

An object of the present invention is to provide a thermosetting composition in which a lignin component exhibits excellent solubility and is suitable for producing polyurethane resin.

According to the present invention, the following thermosetting composition and the like are provided.
1. A thermosetting composition comprising a lignin component comprising two or more kinds of compounds represented by the following formula (1) and a polyol, wherein the amount of the lignin component is 0.1% by mass or more, and the total amount of the compound is 0.06% by mass or more, based on the total amount of the lignin component: 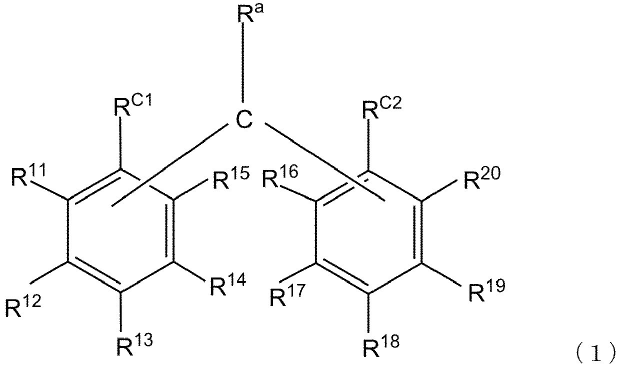 wherein in the formula, R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.
2. A thermosetting composition comprising a lignin component comprising two or more kinds of compounds represented by the following formula (1'), and a polyol, wherein the total amount of the compound is 0.03% by mass or more: 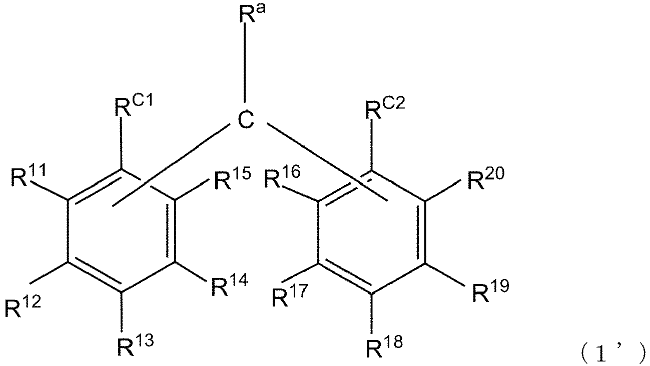 wherein in the formula, R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.
3. A thermosetting composition comprising a lignin component and a polyol, wherein a maximum value of a peak of a differential distribution value (dw/dLogM) present in a molecular weight LogM2.4 to 2.6 of the lignin component as measured by gel permeation chromatography (GPC) is 50 or more and 150 or less, or a difference of an integral distribution value (%) in a molecular weight LogM2.4 to 2.55 is 5 or more and 15 or less.
4. The thermosetting composition according to any one of 1 to 3, wherein the amount of the lignin component is 1 to 900 parts by mass based on 100 parts by mass of the polyol.
5. The thermosetting composition according to any one of 1 to 4, wherein the weight-average molecular weight of the polyol is 200 to 8000.
6. The thermosetting composition according to any one of 1 to 5, wherein the polyol is one or more selected from the group consisting of an aromatic polyol, an alicyclic polyol, an aliphatic polyol, a polylactone polyol, a polycarbonate polyol, a polyester polyol, a polyether polyol and a polymer polyol.
7. The thermosetting composition according to any one of 1 to 6, wherein the polyol is one or more selected from the group consisting of polyethylene glycol, polypropylene glycol, and a polyester polyol.
8. The thermosetting composition according to any one of 1 to 7, wherein the weight-average molecular weight (Mw) of the lignin component is 1,000 to 3,000.
9. The thermosetting composition according to any one of 1 to 8, wherein the molecular weight-distribution (Mw/Mn) of the lignin component is 2.2 to 3.5.
10. The thermosetting composition according to any one of 1 to 9, wherein the amount of the following compound (2) is 0.1% by mass or less. 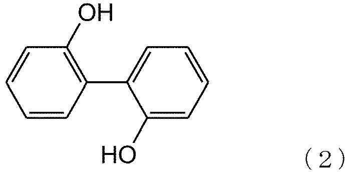
11. The thermosetting composition according to any one of 1 to 10, wherein the amount of a free phenol monomer is 0.02% by mass or more and 8.0% by mass or less.
12. A polyurethane resin composition comprising the thermosetting composition according to any one of 1 to 11 and isocyanate.
13. The polyurethane resin composition according to claim 12, wherein the polyurethane resin composition is a rigid polyurethane resin composition.
14. The polyurethane resin composition according to 12 or 13, which comprises one or more additives selected from the group consisting of red phosphorus, a phosphate ester, a phosphate-containing flame retardant, a bromine-containing flame retardant, and a metal hydroxide.
15. A polyurethane molded body obtained by curing the polyurethane resin composition according to any one of 12 to 14.

According to the present invention, a thermosetting composition in which a lignin component exhibits excellent solubility and is suitable for producing a polyurethane resin, and a polyurethane molded body using the thermosetting composition can be provided.

### Brief Description of the Drawings

Figure 1 is a photograph of the rigid polyurethane resin obtained in Example 12.
Figure 2 is a photograph of a polyurethane molded body obtained by molding the rigid polyurethane resin shown in Figure 1.

### Mode for Carrying out the Invention

Hereinafter, in this specification, "x to y" represents a numerical range of "x or more and y or less." With regard to one technical matter, when a plurality of lower limit values such as "x or more" are present, or when a plurality of upper limit values such as "y or less" are present, the upper limit value and the lower limit value can be arbitrarily selected and combined.

### [Thermosetting composition]

A thermosetting composition according to one embodiment of the present invention contains a lignin component containing two or more kinds of compounds represented by the formula (1) below and a polyol, wherein the amount of the lignin component is 0.1% by mass or more, and the total amount of the compound is 0.06% by mass or more, based on the total amount of the lignin component.

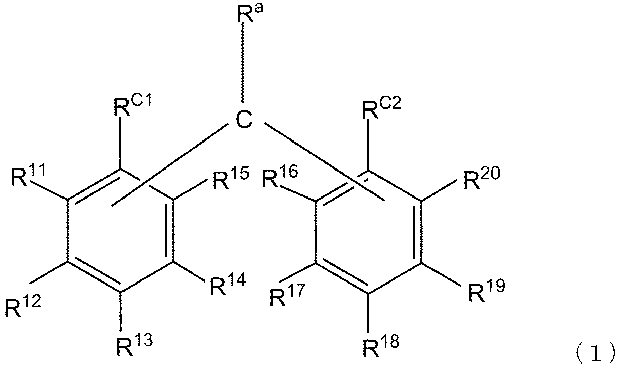

In the formula, R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.

In the formula (1), lines extending from C, to which R^{a} is attached, to the left and right rings are respectively a single bond that is bonded to a carbon atom on the ring to which any of R¹¹ to R¹⁵ is substituted, and a carbon atom on the ring to which any of R¹⁶ to R²⁰ is substituted; and two of R¹¹ to R²⁰ bonded to the carbon atom on the ring to which each of the lines is bonded are a single bond that is bonded to each of the lines.

The hydrocarbon group having 1 to 15 carbon atoms may be linear or branched, and the hydrocarbon group may be saturated or unsaturated. The hydrocarbon group having 1 to 15 carbon atoms is preferably a linear or branched hydrocarbon group having 1 to 10 carbon atoms, more preferably a linear or branched hydrocarbon group having 1 to 5 carbon atoms, and still more preferably a linear hydrocarbon group having 1 to 3 carbon atoms.

Any of these preferable hydrocarbon groups may be saturated or unsaturated.

The hydrocarbon ether group having 1 to 15 carbon atoms may be linear or branched, and the hydrocarbon may be saturated or unsaturated.

The hydrocarbon ether group having 1 to 15 carbon atoms is preferably a linear or branched hydrocarbon ether group having 1 to 10 carbon atoms, more preferably a linear or branched hydrocarbon ether group having 1 to 5 carbon atoms, and still more preferably a linear hydrocarbon ether group having 1 to 3 carbon atoms.

Any of the hydrocarbon of these preferable hydrocarbon ether groups may be saturated or unsaturated.

The hydrocarbon ether group may be represented by, for example, -(CH₂)ₐ-O-(CH₂)_{b}-H), wherein a and b are both integers of 1 or more, provided that a+b is 2 or more. In this case, when the hydrocarbon ether group is linear, both of the structures represented by -(CH₂)ₐ-, and -(CH₂)_{b}-are linear; and when the hydrocarbon ether group is branched, either of the structures represented by -(CH₂)ₐ-, or -(CH₂)_{b}- is branched.

In addition, when the hydrocarbon of the hydrocarbon ether group is saturated, both of - (CH₂)ₐ-, and -(CH₂)_{b}- are saturated hydrocarbons; and when the hydrocarbon of the hydrocarbon ether group is unsaturated, either of -(CH₂)ₐ-, or -(CH₂)_{b}- is an unsaturated hydrocarbon.

When the hydrocarbon ether group is represented by -(CH₂)ₐ-O-(CH₂)_{b}-), the number of carbon atoms of the hydrocarbon ether group is the number represented by (a+b).

Examples of the group including a carbonyl group include an aldehyde group (-CHO), a carboxyl group (-COOH), a carbonyl group (-COR), an ester group (-COOR), and an amide group (-CONRR').

R^{c1} and R^{c2} may be any of a hydroxyl group, an alkoxy group, an amino group and a thiol group, preferably a hydroxyl group or an alkoxy group, and more preferably a hydroxyl group.

The thermosetting composition of the present invention contains a lignin component containing two or more compounds represented by the formula (1) described above. In other words, the two or more compounds represented by the formula (1) are present in the thermosetting composition of the present invention as compounds contained in the lignin component.

The lignin component is obtained, for example, by extracting from a lignin-containing material described later with a solvent containing an organic solvent and purifying the lignin component, and is typically composed mainly of lignin described later (for example, is one having the amount of lignin of 90% by mass or more, 95% by mass or more, or 99% by mass or more). The lignin component and the extraction method thereof will be described in detail later.

When the thermosetting composition contains a lignin component containing two or more kinds of compounds represented by the formula (1) (hereinafter, sometimes referred to as a phenol dimer), the amount of the lignin component is a predetermined amount or more, and the total amount of the phenol dimer based on the total amount of the lignin component is a predetermined amount or more, the solubility of the lignin component in the polyol contained in the thermosetting composition can be increased.

In the explanation below, the "amount of the lignin component" refers to the amount of the lignin component in the entire thermosetting composition, and typically refers to the amount of a mixture of lignin, a phenol dimer, and a free phenol monomer, which will be described later, in the entire thermosetting composition.

Also, in the explanation below, the "total amount of the lignin component" typically refers to the total amount of a mixture of lignin, a phenol dimer, a compound (2) described below, and a free phenol monomer, which will be described later.

The amount of the lignin component in the entire thermosetting composition is 0.1% by mass or more. When a lignin component containing two or more kinds of phenol dimers is contained in the above range, the solubility of the lignin component in the polyol can be increased. In addition, good mechanical properties and flame retardancy can be obtained when the thermosetting composition is used to produce the polyurethane resin.

The amount of the lignin component in the entire thermosetting composition may be 1% by mass or more, may be 5% by mass or more, may be 10% by mass or more, may be 15% by mass or more, may be 20% by mass or more, may be 25% by mass or more, and may be 35% by mass or more.

The amount of the lignin component may be 80% by mass or less, may be 70% by mass or less, may be 65% by mass or less, may be 60% by mass or less, may be 55% by mass or less, and may be 45% by mass or less. Accordingly, an excessive increase in the proportion of components other than the phenol dimer contained in the lignin component can be suppressed, and the effect of increasing the solubility of the lignin component in the polyol can be favorably obtained by the phenol dimer.

Based on the total amount of the lignin component, the total amount of the compound represented by the formula (1) is 0.06% by mass or more, may be 0.1% by mass or more, may be 0.3% by mass or more, may be 0.5% by mass or more, and may be 0.7% by mass or more.

When the total amount of the compound represented by the formula (1) is in the above range based on the total amount of the lignin component, the solubility of the lignin component in the polyol can be increased.

The upper limit of the total amount of the compound represented by the formula (1) based on the total amount of the lignin component is not particularly limited, and is typically 10% by mass or less.

The amount of lignin contained in the thermosetting composition can be confirmed as a value calculated by measuring the amount of the methoxyl group contained in the thermosetting composition in accordance with the method for measuring the methoxyl group by Viebock and Schwappach method (see "Lignin Chemical Study Method" P336 to 340, published by Uni Publication, 1994), and substituting the amount of the obtained methoxyl group as the amount of lignin.

The type of the phenol dimer represented by the formula (1) and the amount thereof contained in the thermosetting composition are confirmed by liquid chromatography-mass spectrometry (LC/MS).

The determination by liquid chromatography-mass spectrometry (LC/MS) may be conducted on the thermosetting composition, or may be conducted on the lignin component.

When the determination by liquid chromatography-mass spectrometry (LC/MS) is conducted on the lignin component, the amount of the phenol dimer in the entire lignin component can be calculated. In addition, when the determination by liquid chromatography-mass spectrometry (LC/MS) is conducted on the lignin component, the amount of the phenol dimer in the entire thermosetting composition can be calculated according to the mixing proportion of the polyol or other component mixed with the lignin component.

In LC/MS, it is assumed that compounds (a) to (h) below are contained in the thermosetting composition as the compound represented by the formula (1). For example, when the amount of the target compound is less than 0.01% by mass, the amount of the target compound is assumed to be below the detection limit. The details of the measurement are described in Examples.

The amount of each of the compounds (a) to (h) specified by the above-described LC/MS contains the amount of isomers having the same molecular weight as the respective compounds and having different bonding positions.

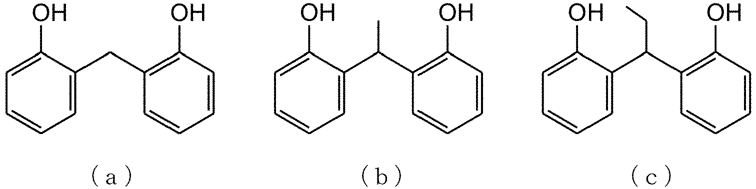

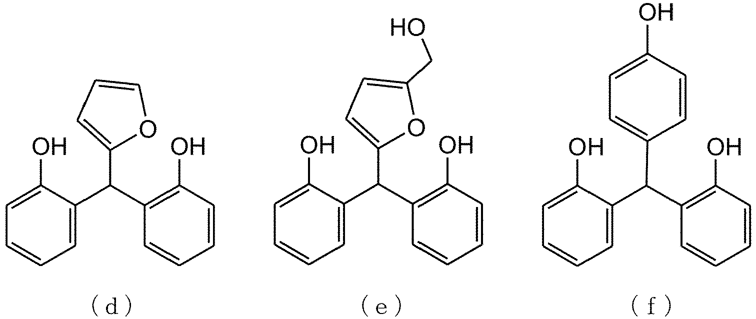

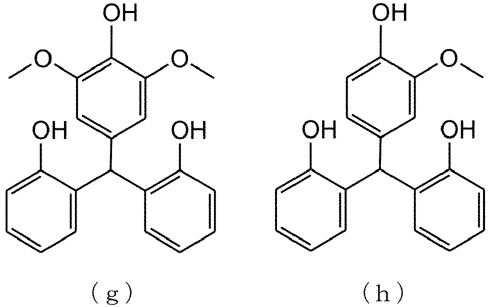

In this embodiment, for example, the thermosetting composition contains two or more compounds selected from the above compounds (a) to (h).

The total amount of the compound represented by the formula (1) relative to the entire thermosetting composition is preferably 0.001% by mass or more. Accordingly, the solubility of the lignin component in the polyol can be increased.

The total amount thereof may be 0.01% by mass or more, may be 0.03% by mass or more, may be 0.05% by mass or more, may be 0.1% by mass or more, may be 0.2% by mass or more, and may be 0.4% by mass or more.

Further, the total amount thereof may be 5% by mass or less, may be 3% by mass or less, may be 2% by mass or less, and may be 1% by mass or less. Accordingly, good mechanical properties and flame retardancy can be obtained when the thermosetting composition is used to produce the polyurethane resin.

In one embodiment, the weight-average molecular weight (Mw) of the thermosetting composition is 200 to 8000. Mw may be 300 or more, and may be 500 or more. Mw may be 7000 or less, and may be 6000 or less.

Note that the range of the weight-average molecular weight (Mw) of the thermosetting composition described above is an example, and the weight-average molecular weight (Mw) of the thermosetting composition is not necessarily limited to the above range.

In one embodiment, the amount of the following compound (2) relative to the entire thermosetting composition is 0.1% by mass or less, and may be 0.05% by mass or less.

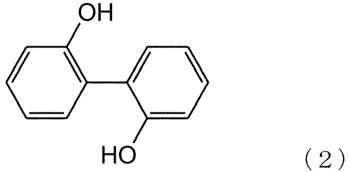

When the amount of the compound (2) is in the above range, in the extraction step of the lignin component described later, loss of the solvent component due to the reaction between the solvent components is suppressed, and it can be said that the lignin component is obtained by appropriately participating in the lignin production of the solvent in the extraction step of lignin component.

The amount of the compound (2) is measured by the method described in Examples below.

In one embodiment, the amount of the free phenol monomer relative to the entire thermosetting composition is 0.02% by mass or more and 8.0% by mass or less. The free phenol monomer contained in the thermosetting composition is mainly the residue of a part of the phenol used in the production of the lignin component that has not been removed. The amount of phenol may be 0.1% by mass or more, 0.5% by mass or more, 1.0% by mass or more, 2.0% by mass or more, or 3.0% by mass or more.

The amount of phenol is determined by the method described in Examples below.

The thermosetting composition according to another embodiment of the present invention contains a lignin component containing two or more kinds of compounds represented by the following formula (1') and a polyol, and the total amount of the compounds is 0.03% by mass or more.

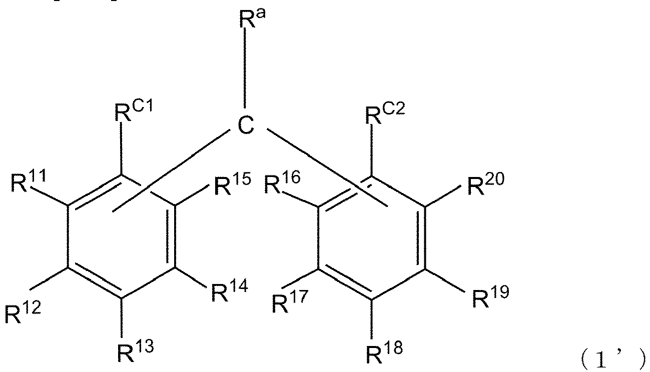

In the formula, R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.

The explanation for R^{a}, R^{c1}, R^{c2}, and R¹¹ to R²⁰ of the compound represented by the formula (1') is the same as the explanation for R^{a}, R^{c1}, R^{c2}, and R¹¹ to R²⁰ of the compound represented by the formula (1).

The thermosetting composition of the present embodiment contains a lignin component containing two or more compounds represented by the formula (1') described above. In other words, the two or more compounds represented by the formula (1') are present in the thermosetting composition of the present embodiment as compounds contained in the lignin component.

The lignin component contained in the thermosetting composition is defined in the same manner as explained in the above-described embodiments.

In the present embodiment, when the thermosetting composition contains two or more kinds of compounds represented by the formula (1') (hereinafter, sometimes referred to as a phenol dimer) and the amount of the compounds is a predetermined amount or more, the solubility of the lignin component in the polyol contained in the thermosetting composition can be increased.

The total amount of the compounds represented by the formula (1') relative to the entire thermosetting composition of the present embodiment may be 0.001% by mass or more, may be 0.01% by mass or more, may be 0.03% by mass or more, may be 0.05% by mass or more, may be 0.1% by mass or more, may be 0.2% by mass or more, or may be 0.4% by mass or more.

When the total amount is within the above range, the solubility of the lignin component in the polyol can be increased.

Further, the total amount may be 5% by mass or less, may be 3% by mass or less, may be 2% by mass or less, and may be 1% by mass or less. Accordingly, good mechanical properties and flame retardancy can be obtained when the thermosetting composition is used to produce the polyurethane resin.

In the present embodiment, the type of the phenol dimer represented by the formula (1') and the amount thereof contained in the thermosetting composition can be confirmed by LC/MS in the same manner as the method for confirming the type of the phenol dimer represented by the formula (1) and the amount thereof contained in the thermosetting composition of the above-described embodiment.

In LC/MS, it is assumed that the compounds (a) to (h) described above are contained in the thermosetting composition as the compound represented by the formula (1').

In the present embodiment, a preferable range of the weight-average molecular weight (Mw) of the thermosetting composition, a preferable range of the amount of the compound (2) relative to the entire thermosetting composition, and a preferable range of the amount of the free phenol monomer relative to the entire thermosetting composition are the same as those explained in the above-described embodiment.

The thermosetting composition according to another embodiment of the present invention contains a lignin component and a polyol, and the lignin component has a maximum value of a peak of a differential distribution value (dw/dLogM) present in a molecular weight LogM2.4 to 2.6 of the lignin component measured by GPC is 50 or more and 150 or less, or a difference of an integral distribution value (%) in a molecular weight LogM2.4 to 2.55 is 5 or more and 15 or less.

When the maximum value of a peak of a differential distribution value (dw/dLogM) present in a molecular weight LogM2.4 to 2.6 of the lignin component as measured by GPC is 50 or more and 150 or less, the solubility of the lignin component in the polyol can be increased. The maximum value may be 130 or less, and may be 110 or less.

Similarly, when the difference of an integral distribution values (%) in a molecular weight LogM2.4 to 2.55 is 5 or more and 15 or less, the solubility of the lignin components in the polyol can be increased. The integral distribution value may be 7 or more, and may be 8 or more. Further, the integral distribution value may be 13 or less, and may be 12 or less.

The lignin component contained in the thermosetting composition of the present invention is obtained by, for example, extracting from a lignin-containing material with a solvent containing an organic solvent and purifying the extract as described above. The solvent containing an organic solvent typically contains at least a compound represented by the following formula (I).

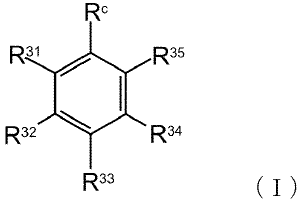

In the formula (I), R³¹ to R³⁵ independently represents a hydrogen atom, a hydroxyl group, a hydrocarbon group having 1 to 15 carbon atoms, a hydrocarbon ether group having 1 to 15 carbon atoms, or a group including a carbonyl group, and each of R³¹ to R³⁵ may be the same as or different from each other. Provided that at least one of R³¹ to R³⁵ is a hydrogen atom.

The hydrocarbon group in which R³¹ to R³⁵ are hydrocarbon groups having 1 to 15 carbon atoms is the same as R¹¹ to R²⁰ in the formula (1). The hydrocarbon ether group in which R³¹ to R³⁵ are hydrocarbon ether groups having 1 to 15 carbon atoms is the same as R¹¹ to R²⁰ in the formula (1). The group including a carbonyl group in which R³¹ to R³⁵ are groups including a carbonyl group is the same as R¹¹ to R²⁰ in the formula (1).

R^{c} represents a hydroxyl group, an alkoxy group, an amino group or a thiol group.

R^{c} may be any of a hydroxyl group, an alkoxy group, an amino group and a thiol group, and from the viewpoint of affinity with the basic skeleton of lignin, a hydroxyl group or an alkoxy group is preferable, and a hydroxyl group is more preferable.

The solvent may contain a component other than the compound represented by the formula (I). Examples of the solvent component other than the compound represented by the formula (I) include any one or more of alcohols, ketones, ethers, esters, aromatics other than the compound represented by the formula (I), and water, from the viewpoint of solubility of lignin in the raw material and economy.

In the specification, "lignin" is a polymer compound polymerized from three kinds of lignin monomers, which are p-hydroxycinnamic alcohols, and has a basic skeleton represented by the following formula (A).

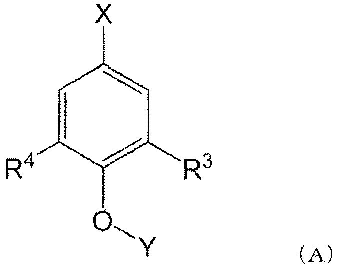

In the formula (A), the substituents R³ and R⁴ represent a hydrogen atom or a methoxy group. Those in which both R³ and R⁴ are hydrogen atoms are referred to as p-hydroxyphenyl units (H-type skeleton), those in which either R³ and R⁴ is a hydrogen atom are referred to as guaiacyl units (G-type skeleton), and those in which both R³ and R⁴ are not hydrogen atoms are referred to as syringil units (S-type skeleton).

In the formula (A), X is bonded with a carbon atom, and Y is bonded with a hydrogen atom or a carbon atom.

### (Lignin-containing material)

The lignin-containing material is not particularly limited as long as the material contains lignin.

In one embodiment, the lignin-containing material is one or more selected from the group consisting of biomass and biomass residues.

Examples of the biomass residues include, for example, those derived from plant-based biomass such as woody biomass and herbaceous biomass.

Examples of the biomass residues include a saccharification residue and a fermentation residue of a plant-based biomass (a second-generation ethanol saccharification residue, a second-generation ethanol fermentation residue, and the like), and a black liquor (sulfite lignin, kraft lignin, soda lignin, and the like), and any one or more of these examples may be used. Among these, from the viewpoints of availability, quality of the lignin component, and economy, it is preferable to use any one or more of saccharification residues and fermentation residues of plant-based biomass as the lignin-containing material.

The woody biomass and herbaceous biomass, may be non-food plant biomass and may be lignocellulose-based biomass.

Examples of the woody biomass include conifers and hardwoods such as cedar, cypress, hiba, cherry, eucalyptus, beech, and bamboo.

Examples of the herbaceous biomass includes, for example, palm tree trunks and empty cavity of palm, palm fruit fibers and seeds, bagasse (squeeze slag of cane and high biomass cane), cane top (top and leaf of cane), energetic canes, rice straws, wheat straws, corn cobs/stems/residues of corn (corn stovers, corn cobs, corn hulls), residues of sorghum (including sweet sorghum), Jatropha peel and hulls, cashew hulls, switchgrass, erianthus, high biomass yield crops, energy crops, and the like.

Among these, herbaceous biomass is preferred, and empty cavity of palm, palm fruit fibers and seeds, wheat straw, corn cobs/stems/residues of corn (corn stover, corn cobs, corn hulls), bagasse, residues of sorghum (including sweet sorghum), cane top, energetic cane, and residues after extraction of useful components of these are more preferred, and empty cavity of palm, corn cobs/stems/residues of corn (corn stover, corn cobs, corn hulls), bagasse, residues of sorghum (including sweet sorghum), cane top, energetic cane, residues after extraction of useful components of these are more preferred. The useful components include, for example, hemicellulose, carbohydrates, minerals, moisture, and the like.

The bagasse contains about 5 to 30% by mass of lignin. In addition, lignin in the bagasse includes all of the H units, the G units and the S units as the basic skeleton.

The plant-based biomass may be pulverized. The plant-based biomass may also be in the form of a block, a chip, a powder, or a hydrate containing water.

An empty cavity of palm, a bagasse, a corn stover, or the like is treated with an organosolv method, a pressurized hydrothermal method, a steam explosion method, an ammonia treatment method, an ammonia explosion method, an acid treatment method, a dilute sulfate explosion method, an alkali treatment method, an oxidative decomposition method, a pyrolysis method and microwave heating method, or the like, and preferably treated with an acid treatment, a dilute sulfate explosion, a steam explosion, or the like to separate hemicellulose to the solution side, and then the glucose is separated to the solution side by converting cellulose to glucose using an enzyme, or the hemicellulose is saccharified together with cellulose without separating the hemicellulose to separate to the solution side, and the remaining solid is a saccharification residue of the plant-based biomass. Alternatively, the saccharide is not separated, and is separated as ethanol by fermentation to the solution side, and the remaining solid is the fermentation residue of the plant-based biomass.

The saccharification residue of the plant-based biomass contains lignin as a main component, and contains decomposed organic substances, catalysts, enzymes, ash, cellulose, and the like. The fermentation residue of the plant-based biomass contains lignin as a main component, and contains decomposed organic substances, catalysts, enzymes, yeast, ash, cellulose, and the like.

The method for producing the lignin component is, for example, as follows.

A solvent containing, for example, a compound having one or more selected from the group consisting of a hydroxyl group and an ether bond (hereinafter also referred to as "organic solvent A") is added using any one or more of the saccharification residue and the fermentation residue of the plant-based biomass as a raw material. The organic solvent A is described in detail in the "Solvent" section below.

The solvent comprising the organic solvent A typically contains at least a compound represented by the formula (I) as described above.

After adding the solvent and heating for about 2 to 4 hours, the heating solution contains insoluble matter, and is filtered through No.2 filter paper. The Filtered solid is unextracted components and inorganic contaminants. The filtrate is distilled under reduced pressure to remove the solvent. The solvent that cannot be removed by distillation are removed by vacuum drying. The solid to be separated is lignin component.

Further, as the lignin-containing material used as a raw material, a lignin separated from a non-food plant biomass by performing processes such as an organosolv method, a pressurized hydrothermal method, a steam explosion method, an ammonia treatment method, an ammonia explosion method, an acid treatment method, a dilute sulfate explosion method, an alkali treatment method, an oxidative decomposition method, a pyrolysis method and a microwave heating method can be used. Specifically, for example, a lignin contained in a non-food plant biomass can be eluted into a solvent by treating with an organic solvent or a solvent containing an organic solvent and water, and the lignin-containing solution can be filtered to remove cellulose and the like, and then the solution can be concentrated and dried to obtain a separated lignin. A lignin component can be directly extracted from a non-food plant biomass by using a solvent containing the organic solvent A as the organic solvent.

### (Solvent)

The solvent used for the extraction contains an organic solvent. The solvent containing an organic solvent typically contains a compound represented by the formula (I) as described above. Examples of the organic solvent other than the compound represented by the formula (I) include alcohols such as methanol, ethanol, isopropyl alcohol, ethylene glycol and polyethylene glycol; ketones such as acetone and methyl ethyl ketone; ethers such as tetrahydrofuran and 1,4-dioxane; esters such as ethyl acetate; and aromatics other than the compound represented by the formula (I) such as toluene.

In one embodiment, a solvent containing the organic solvent A (a compound having one or more selected from the group consisting of a hydroxyl group and an ether bonding) is used for extracting lignin. By using the organic solvent A as the organic solvent for extracting lignin, it is expected that the extract derived from the lignin is suitably prevented from hydrophilic denaturation. The lignin component to be extracted may be reacted with the organic solvent containing the organic solvent A. By using the organic solvent A, an extract derived from lignin can be suitably extracted.

When the organic solvent A has a hydroxyl group, the number of hydroxyl groups possessed by the organic solvent A is not particularly limited, and may be, for example, 1 or more, and may be 10 or less, 5 or less, 4 or less, 3 or less, or 2 or less. The number of hydroxyl groups possessed by the organic solvent A may be 1, 2, 3, 4 or 5, may be 1, 2 or 3, may be 1 or 2, and may be 1.

Examples of the organic solvent A having two hydroxyl groups include ethylene glycol, 1,2-propanediol, 1,3-propanediol, 1,2-butanediol, 1,3-butanediol, 1,4-butanediol, 2,3-butanediol, diethylene glycol, triethylene glycol, polyethylene glycol, and the like. Examples of the organic solvent A having three hydroxyl groups include glycerin, 1,2,3-butanetriol, 1,2,4-butanetriol, 1,2,3-heptatriol, 1,2,4-heptatriol, 1,2,5-heptatriol, 2,3,4-heptatriol, and the like. Examples of the organic solvent A having four hydroxyl groups include pentaerythritol, erythritol, and the like. Examples of the organic solvent A having five hydroxyl groups include xylitol and the like. Examples of the organic solvent A having six hydroxyl groups include sorbitol and the like.

From the viewpoints of improving the extraction efficiency of lignin, and economy, the organic solvent A having two or more hydroxyl groups (organic solvent A having a plurality of hydroxyl groups) is preferably one or more selected from the group consisting of ethylene glycol, 1,2-propanediol, 1,3-propanediol, 1,2-butanediol, 1,3-butanediol, 1,4-butanediol, 2,3-butanediol, diethylene glycol, triethylene glycol, polyethylene glycol, polypropylene glycol, and glycerin, more preferably one or more selected from the group consisting of ethylene glycol, 1,2-propanediol, 1,3-propanediol, 1,2-butanediol, 1,3-butanediol, 1,4-butanediol, polyethylene glycol, polypropylene glycol, and glycerin, still more preferably one or more selected from the group consisting of ethylene glycol, polyethylene glycol, and glycerin, and still more preferably ethylene glycol and polyethylene glycol.

The organic solvent A is preferably a compound represented by the following formula (II).

R-OH (II)

In the formula (II), R is an alkyl group having 1 to 10 carbon atoms, or a substituted or unsubstituted phenyl group.

When R is an alkyl group having 1 to 10 carbon atoms, the number of carbon atoms in the alkyl group may be 1 or more, 2 or more, 3 or more, or 4 or more, and may be 10 or less, 8 or less, and 6 or less. The alkyl group may be linear or may be branched.

In particular, when the number of carbon atoms in the alkyl group is 2 or more, it is expected that the extract derived from lignin is more remarkably prevented from hydrophilic denaturation. Further, as the number of carbon atoms increases to 2 or more, 3 or more, or even 4 or more, such an effect can be expected to be more remarkably exhibited.

The compound represented by the formula (II) in which R is an alkyl group having 1 to 10 carbon atoms is, for example, one or more selected from the group consisting of methanol, ethanol, 1-propyl alcohol, 2-propyl alcohol, 1-butyl alcohol, 2-butyl alcohol, isobutyl alcohol, tertiary-butyl alcohol, 1-pentyl alcohol, 2-pentyl alcohol, 3-methyl-1-butyl alcohol, 1-hexyl alcohol, cyclohexyl alcohol, 1-heptyl alcohol, 1-octyl alcohol, 2-ethylhexyl alcohol, and the like; preferably one or more selected from the group consisting of methanol, ethanol, 1-propyl alcohol, and 2-propyl alcohol, more preferably one or more selected from the group consisting of methanol, ethanol, and 2-propyl alcohol, and still more preferably ethanol.

The compound represented by the formula (I) described above corresponds to a case where R is a substituted or unsubstituted phenyl group in the formula (II), and the hydroxyl group ("OH" group in the formula (II)) is R^{c} described above.

In the compound represented by the formula (I), at least one of R³¹, R³³ and R³⁵ is preferably a hydrogen atom, and more preferably all of R³¹, R³³ and R³⁵ are hydrogen atoms.

The compound represented by the formula (I) is, for example, one or more selected from the group consisting of phenol, catechol, resorcinol, hydroquinone, phloroglucin, o-cresol, m-cresol, p-cresol; 2-alkylphenols such as 2-ethylphenol, and 2-propylphenol; 3-alkylphenols such as 3-ethylphenol, 3-propylphenol, and cardanol; 4-alkylphenols such as 4-ethylphenol, 4-propylphenol, 4-octylphenol, and 4-nonylphenol; 5-alkylresorcinol such as 5-methylresorcinol, 5-ethylresorcinol, and 5-propylresorcinol; 3,5-dialkylphenols such as 3,5-dimethylphenol, 3-methyl-5-ethyl-phenol, and 3,5-diethylphenol; anisole, aniline, thiophenol, and the like, preferably one or more selected from the group consisting of phenol, catechol, resorcinol, hydroquinone, o-cresol, m-cresol, p-cresol, cardanol, 4-octylphenol, 4-nonylphenol, and anisole, more preferably one or more selected from the group consisting of phenol, catechol, resorcinol, hydroquinone, o-cresol, m-cresol, p-cresol, and anisole, still more preferably one or more selected from the group consisting of phenol, o-cresol, m-cresol, p-cresol, and anisole, still more preferably one or more selected from the group consisting of phenol and anisole, and still more preferably phenol.

When a compound represented by the formula (I) such as phenol is used as the organic solvent, the lignin component can be expected to increase the skeleton of the H-type skeleton and the G-type skeleton by reacting with the compound represented by the formula (I).

When the compound represented by the formula (I) is used as the organic solvent, it is expected that the reaction between the lignin and the compound represented by the formula (I) result in a substitution reaction in which the substituents R³ and R⁴ in the lignin basic skeleton represented by the formula (A) in the lignin are transferred to the structure derived from the compound represented by the formula (I), thereby producing the compound represented by the formula (1).

The organic solvent A may be used alone or in combination of two or more thereof.

As the organic solvent A, for example, one or two or more selected from compounds represented by the formula (II) in which R is an alkyl group having 1 to 10 carbon atoms and one or two or more selected from compounds represented by the formula (II) in which R is a substituted or unsubstituted phenyl group (i.e., compounds represented by the formula (I)) may be used in combination. As a specific example, ethanol and phenol may be used in combination.

The organic solvent may contain an organic solvent other than the organic solvent A.

The organic solvent other than the organic solvent A is not particularly limited, and examples thereof include, for example, ketones such as acetone and methyl ethyl ketone, esters such as ethyl acetate, and aromatics other than the compound represented by the formula (I) such as toluene. The organic solvent other than the organic solvent A may be used alone or in combination of two or more thereof.

In one embodiment, 10% by mass or more, 20% by mass or more, 30% by mass or more, 40% by mass or more, 50% by mass or more, 60% by mass or more, 70% by mass or more, 80% by mass or more, 90% by mass or more, 95% by mass or more, 97% by mass or more, or 99% by mass or more of the organic solvent is the organic solvent A.

The solvent used for the extraction may contain water in addition to the organic solvent.

The proportion of water to organic solvent in the solvent used for extraction may be, for example, 10 parts by mass or more, 20 parts by mass or more, 30 parts by mass or more, 50 parts by mass or more, or 70 parts by mass or more, and may be 900 parts by mass or less, 700 parts by mass or less, 400 parts by mass or less, 300 parts by mass or less, or 100 parts by mass or less, based on 100 parts by mass of the organic solvent.

When the lignin component is extracted with a solvent from the lignin-containing material, the solvent may or may not be phase separated. When the solvent is phase separated, the "solvent used for extraction" means the solvent that constitutes the phase containing the highest concentration of the lignin component.

### (Extraction)

Extraction in the present invention refers to extraction of a lignin component containing an extract derived from lignin from a lignin-containing material which contains a component other than lignin.

In one embodiment, "extraction" refers to extraction of a lignin component from a lignin-containing solid matter when the lignin-containing material is a lignin-containing solid matter, rather than the addition of an organic solvent to a solution (e.g., an aqueous solution containing a basic compound) in which all of the lignin is already dissolved. In such an embodiment, the lignin-containing material prior to extraction (the lignin-containing material prior to addition of the organic solvent) contains:
a lignin-containing solid matter and lignin already dissolved in a solvent or
a lignin-containing solid matter and no lignin already dissolved in the solvent.

In the extraction, the amount of the solvent added to the lignin-containing material is not particularly limited.

The mass ratio of solvent to lignin [solvent/lignin] in the lignin-containing material may be, for example, 0.1 or more, and may be 15 or less, 10 or less, 5 or less, 4 or less, 3 or less, 2 or less, 1 or less, 0.7 or less, or 0.5.

### (Acid catalyst)

The above-mentioned extraction can be carried out without catalyst or under catalyst. Examples of the catalyst include an acid catalyst. Examples of the acid catalyst include inorganic acids such as phosphoric acid, phosphoric acid ester, hydrochloric acid, sulfuric acid, and sulfuric acid ester, and organic acids such as acetic acid, formic acid, oxalic acid, and p-toluenesulfonic acid. The acid catalyst may be used alone or in combination of two or more thereof.

The amount of the acid catalyst may be, for example, larger than 0% by mass, 0.1% by mass or more, or 0.2% by mass or more, and may be 5.0% by mass or less, 3.0% by mass or less, or 2.6% by mass or less, where the total amount of lignin and the solvent is 100 parts by mass.

When the extraction is carried out without a catalyst, for example, the post-treatment (purification step) after the extraction step can be omitted.

The extraction temperature is not particularly limited as long as the lignin component can be extracted from the lignin-containing material, and may be, for example, 100°C or higher, 140°C or higher, higher than 140°C, 150°C or higher, or 180°C or higher, and may be 350°C or lower, 300°C or lower, 270°C or lower, 250°C or lower, or 230°C or lower. When the temperature is higher than 140°C, the solubility of lignin (lignin component) can be increased to promote extraction, and when the temperature is 300°C or lower, the progress of lignin recombination can be suitably prevented.

The extraction time may be set as appropriate, and may be, for example, 0.1 hour or longer, 0.5 hours or longer, 1 hour or longer, or 2 hours or longer, and may be 15 hours or shorter, 10 hours or shorter, or 8 hours or shorter.

### (Purification)

The lignin component is produced by the above-described extraction, and may be purified after the extraction if desired. An example of purification will be described below.

The lignin component after extraction may be first subjected to a solid-liquid separation step as purification (purification step). The lignin component after extraction is dissolved in a solvent, but unextracted components and inorganic contaminants are present in the liquid as a solid. These are preferably removed by filtration (hot filtration). For example, the extract is placed in a pressurized filter (hot filter) equipped with a filter paper such as No.5C or No.2, and is filtered under pressure at about 20 to 100°C, about 20 to 70°C, usually about 20 to 50°C, and under about 0.1 to 0.99 MPa, usually about 0.1 to 0.4 MPa. The filtered solid may optionally be diluted and/or washed with a solvent and filtered. In the filtration, the lignin component is contained in the filtrate. Further, for example, the extraction product liquid may be diluted and/or washed with any one or more of water, ketones such as acetone and methyl ethyl ketone, alcohols such as methanol, ethanol, and isopropyl alcohol, and general-purpose solvents having a low boiling point such as ethers such as tetrahydrofuran, and then subjected to solid-liquid separation. In the solid-liquid separation, the lignin component is contained in a solution.

A method for performing solid-liquid separation is not particularly limited, and examples thereof include filtration, filter pressing, centrifugator, and a dehydrator.

In addition, the solution containing the lignin component may be subjected to distillation. The distillation may be performed by vacuum distillation at the temperature of about 40 to 200°C, usually about 50 to 150°C, and under reduced pressure of about 3 to 20 kPa, usually about 5 to 10 kPa to remove the solvent. In the distillation, the lignin component is obtained as a solid or viscous solid. Further, for example, when other diluting solvents are used, the solvent used for extraction can be removed by distilling under reduced pressure to remove the general-purpose solvent having a low boiling point at an appropriate temperature considering the boiling point of the solvent, and then the solvent used for extraction can be removed in the same manner as above. In the distillation, the lignin component is obtained as a solid or viscous solid.

The lignin component obtained by distillation may be purified by removing residual solvent (for example, the organic solvent A) by heating to 50 to 200°C and vacuum drying in a solid or molten state. Further, the lignin component in the heated flow state after distillation may be purified by performing the vacuum drying in the same manner, by removing the residual solvent (for example, organic solvent A).

Reprecipitation is not preferred for the lignin component obtained by distillation or decompression to dryness. Accordingly, a lignin component containing the compound represented by the formula (1) in the above amount range can be easily obtained.

In the purification step, the above-mentioned filtration, distillation, and decompression to dryness may be performed alone or in combination of two or more thereof.

The organic solvent remaining in the lignin component is not particularly limited, but is usually less than 30% by mass, preferably less than 10% by mass, more preferably less than 5% by mass, and still more preferably less than 1% by mass, based on the total amount thereof.

According to the method for producing a lignin component of the present invention, it is preferable that 50% by mass or more of the amount of lignin contained in the saccharification residue of the plant-based biomass or the fermentation residue of the plant-based biomass is taken out as the lignin component, more preferably 60% by mass or more is taken out as the lignin component, still more preferably 70% by mass or more is taken out as the lignin component, even more preferably 80% by mass or more is taken out as the lignin component, and even more preferably 90% by mass or more is taken out as the lignin component.

In one embodiment, the weight-average molecular weight (Mw) of the lignin component is 1,000 to 3,000. Mw may be 1300 or more, and may be 1500 or more. Mw may be 2900 or less, and may be 2700 or less.

In one embodiment, the molecular weight-distribution (Mw/Mn) of the lignin component is 2.2 to 3.5. Mw/Mn may be 2.3 or more, may be 2.4 or more, may be 2.5 or more, and may be 2.6 or more. Mw/Mn may be 3.3 or less, may be 3.0 or less, and may be 2.7 or less.

The respective molecular weights of the lignin components are determined by GPC as described in Examples below.

In one embodiment, at least one or more selected from the group consisting of an aromatic polyol, an alicyclic polyol, an aliphatic polyol, a polylactone polyol, a polycarbonate polyol, a polyester polyol, a polyether polyol and a polymer polyol are used as the polyol.

Examples of the aromatic polyol include bisphenol A, bisphenol F, phenol novolac, cresol novolac, and the like.

Examples of the alicyclic polyol include cyclohexanediol, methylcyclohexanediol, isophoronediol, cyclohexanedimethanol, dicyclohexylmethanediol, dimethyldicyclohexylmethanediol, and the like.

Examples of the aliphatic polyol include, for example, an aliphatic polyol including 2 to 12 carbon atoms, and specific examples thereof include polybutadiene polyol, hydrogenated polybutadiene polyol, hydrogenated isoprene polyol, ethylene glycol, 1,3-propanediol, 1,4-butanediol, 1,5-pentanediol, neopentyl glycol, 1,6-hexanediol, 1,10-decanediol, 1,12-dodecanediol, 2,2-diethylpropanediol, 2-ethyl-2-butylpropanediol, trimethylolethane, trimethylolpropane, methylpentanediol, and the like.

The aliphatic polyol is preferably ethylene glycol, 1,3-propanediol, 1,4-butanediol, 1,5-pentanediol, neopentyl glycol, 1,6-hexanediol, 1,10-decanediol, or 1,12-dodecanediol, and more preferably ethylene glycol, 1,4-butanediol, neopentyl glycol, or 1,6-hexanediol.

Examples of the polylactone polyol include polycaprolactone polyols such as polypropiolactone glycol and polycaprolactone glycol, and polyvalerolactone glycol.

Examples of the polyester polyol include adipate-based polyols such as ethylene glycol adipate, diethylene adipate glycol, butylene glycol adipate, and trimethylolpropane/diethylene glycol adipate, and an aromatic polyester polyol. From the viewpoint of solubility of the lignin component, the polyester polyol is preferably an aromatic polyester polyol.

Examples of the polycarbonate polyol include polyols obtained by a dealcohol reaction of a hydroxyl group-containing compound such as ethylene glycol, propylene glycol, butanediol, pentanediol, hexanediol, octanediol, and nonanediol with diethylene carbonate, dipropylene carbonate, and the like.

Examples of the polyether polyol include, for example, polytetramethylene ether glycol, polyethylene glycol, polypropylene glycol, polytrimethylene ether glycol, and the like.

Both polyethylene glycol and polypropylene glycol may be diol-type, or may be triol-type.

From the viewpoint of solubility of the lignin component, the polyether polyol is preferably polyethylene glycol or polypropylene glycol, and more preferably triol-type polypropylene glycol.

Examples of the polymer polyol include polymer obtained by graft-polymerizing ethylenically unsaturated compound such as acrylonitrile, styrene, methyl acrylate, and methacrylate against the above-described aromatic polyol, an alicyclic polyol, an aliphatic polyol, a polyester polyol, and the like; a polybutadiene polyol, a modified polyol of polyhydric alcohol, and a hydrogenated product thereof.

These polyols may be used alone or in a mixture of two or more thereof.

The polyol is preferably at least one or more selected from the group consisting of polyethylene glycol, polypropylene glycol, and a polyester polyol from the viewpoint of solubility of the lignin component and handleability.

Among these, triol-type polypropylene glycol or an aromatic polyester polyol is more preferable.

In one embodiment, the weight-average molecular weight (Mw) of the polyol is 200 to 8000. As a result, the polyol exhibits good reactivity with the isocyanate described later, and the lignin component can be satisfactorily dissolved.

Mw may be 250 or more, and may be 300 or more. Also, Mw may be 8000 or less, may be 7000 or less, or may be less than 7000.

In one embodiment, the amount of the polyol relative to the entire thermosetting composition is 20 to 99% by mass. As a result, the lignin component can be well dissolved.

The amount of the polyol may be 30% by mass or more, may be 40% by mass or more, or may be 60% by mass or more.

The amount of the polyol may be 95% by mass or less, may be 90% by mass or less, or may be 80% by mass or less.

In one embodiment, the amount of the lignin component is 1 to 900 parts by mass based on 100 parts by mass of the polyol.

Accordingly, since the amount ratio of the lignin component relative to the polyol is within an appropriate range, the lignin component exhibits good solubility in the polyol, and good mechanical strength can be obtained when the thermosetting composition of the present invention is used to produce a polyurethane resin.

The amount of the lignin component may be 1 part by mass or more, 10 parts by mass or more, or 30 parts by mass or more based on 100 parts by mass of the polyol.

The amount of the lignin component may be 500 parts by mass or less, or 300 parts by mass or less, or 100 parts by mass or less based on 100 parts by mass of the polyol.

From the viewpoint of ease of handling, the thermosetting composition may have a viscosity of 50 to 20000 mPa·s, may have a viscosity of 400 to 13000 mPa·s, or may have a viscosity of 800 to 9000 mPa·s at 55°C measured according to JIS K7117-1.

The viscosity of the thermosetting composition is measured by the method described in Examples below.

For example, 70% by mass or more, 80% by mass or more, 90% by mass or more, 98% by mass or more, 99% by mass or more, 99.5% by mass or more, 99.9% by mass or more, or 100% by mass of the thermosetting composition according to one embodiment may be a lignin component, and a polyol.

### [Polyurethane resin composition]

The polyurethane resin composition according to one embodiment of the present invention contains the thermosetting composition of the present invention described above and an isocyanate. The polyurethane resin composition according to the present invention is a composition containing a raw material which is polymerized to form polyurethane resin as an essential component, and is a composition containing no polyurethane resin or containing polyurethane resin as an optional component.

The isocyanate is not particularly limited as long as the isocyanate is polyisocyanate having two or more isocyanate groups in one molecule.

Examples of the isocyanate include aliphatic isocyanate, alicyclic isocyanate and aromatic isocyanate, as well as their modified forms.

Examples of the aliphatic isocyanate include hexamethylene diisocyanate, lysine diisocyanate, lysine triisocyanate, dimer acid diisocyanate, norbornene diisocyanate, octadecyl isocyanate, methyl isocyanate, butyl isocyanate, and the like.

Examples of the alicyclic isocyanate include isophorone diisocyanate, hydrogenated phenylmethane diisocyanate, trimethylhexamethylene diisocyanate, hydrogenated xylylene diisocyanate, and the like.

Examples of the aromatic isocyanate include tolylene diisocyanate, xylylene diisocyanate, diphenylmethane diisocyanate, polymeric diphenylmethane diisocyanate, triphenylmethane triisocyanate, tris(isocyanatephenyl)thiophosphate, phenyl isocyanate, paraphenylene diisocyanate, tetramethylxylene diisocyanate, and the like.

Examples of the modified form of isocyanate include urethane prepolymer, hexamethylene diisocyanate biuret, hexamethylene diisocyanate trimer, isophorone diisocyanate trimer, and the like. A plant-derived isocyanate such as castor oil is also included. These isocyanates can be used alone or as a mixture of two or more kinds.

The NCO index in the polyurethane resin composition is preferably 0.7 to 2.0, more preferably 0.8 to 1.8, and particularly preferably 0.9 to 1.7. When the NCO index is 0.7 or more, good polyurethane resin is obtained. Further, when the NCO index is 2.0 or less, the increased compressive set is suppressed.

In the present specification, the NCO index represents a ratio of the total amount of the isocyanate group (NCO) in the isocyanate and the hydroxyl group (OH) contained in the entire polyol including the lignin component and the other polyol component (NCO/OH).

In one embodiment, the polyurethane resin composition may further contain a catalyst.

For example, a tertiary amine can be used as a urethanization catalyst.

In addition, metal salt and/or quaternary ammonium salt can be used as a trimerization reaction promoting catalyst.

The urethanization catalyst and the trimerization reaction promoting catalyst may be used in combination. For example, a tertiary amine and a metal salt and/or a quaternary ammonium salt may be used in combination.

Examples of the tertiary amine include N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylguani\dine, 1,3,5-tris(N,N-dimethylamino-propyl)hexahydro-s-triazine, 1,8-diazabicyclo[5.4.0]undecene-7, triethylenediamine, N,N,N',N'-tetramethylhexamethylenediamine, N,N'-dimethylpiperazine, dimethylcyclohexylamine, N-methylmorpholine, N-ethylmorpholine, bis(2-dimethylaminoethyl) ether, 1-methylimidazole, 1,2-dimethylimidazole, 1-isobutyl-2-methylimidazole, 1-dimethylaminopropylimidazole, N-methyl-N-(N,N-dimethylaminoethyl)ethyl alcohol amine, and the like.

Examples of the metal salt include a potassium salt, a tin salt, a lead salt, and the like. Examples thereof include potassium acetate, potassium 2-ethylhexanoate, dibutyltin dilaurate, tin octylate, lead octylate, bismuth 2-ethylhexanoate, and the like.

Examples of the quaternary ammonium salt include tetraalkylammonium halide such as tetramethylammonium chloride; tetraalkylammonium hydroxide such as tetramethylammonium hydroxide; a tetraalkylammonium organic salt such as tetramethylammonium 2-ethylhexanoate, 2-hydroxypropyltrimethylammonium formate, and 2-hydroxypropyltrimethylammonium 2-ethylhexanoate; a quaternary ammonium compound obtained by anion-exchange reaction of quaternary ammonium carbonate, which is obtained by reacting a tertiary amine such as N,N,N',N'-tetramethylethylenediamine and a carbonic acid diester, with 2-ethylhexane; and the like.

The amount of the catalyst is preferably 0.1 to 5 parts by mass based on 100 parts by mass of the mixture of the lignin component and the polyol.

By adjusting the amount of the catalyst, the reactivity of the mixture of the lignin component and the polyol with the isocyanate can be controlled.

In one embodiment, the polyurethane resin composition may further contain a foaming agent.

Examples of the foaming agent include HCFC-based foaming agent such as HCFC-141b, HCFC-142b, HCFC-124, and HCFC-22; HFC-based foaming agent such as 1,1,1,2-tetrafluoroethane (HFC-134a), 1,1,1,3,3-pentafluoropropane (HFC-245fa), 1,1,1,3,3-pentafluorobutane (HFC-365mfc), 1, 1,2,2-tetrafluoroethyl difluoromethyl ether (HFE-236pc), 1,1,2,2-tetrafluoroethylmethylether (HFE-254pc), and 1,1,1,2,2,3,3-heptafluoropropylmethylether (HFE-347mcc); hydrofluoroolefin such as Opteon 1100 manufactured by Chemours-Mitsui Fluoroproducts Co.,Ltd.; hydrocarbon-based foaming agent such as butane, hexane, cyclohexane, n-pentane, iso-pentane, and cyclopentane; water; and inert gas such as air, nitrogen, and carbon dioxide.

The addition state of the inert gas may be any one of a liquid state, a supercritical state, and a subcritical state. When a foaming agent other than water is used, the foaming agent may be used alone or in combination of two or more thereof.

When water is used as the foaming agent or foaming aid, the amount of water is preferably 0.5 to 10 parts by mass, more preferably 0.5 to 7 parts by mass, based on 100 parts by mass of the mixture of the lignin component and the polyol.

When pentane (one or more selected from the group consisting of normal pentane, isopentane and cyclopentane) is used as the foaming agent, the amount of pentane is preferably 0.5 to 60 parts by mass, more preferably 0.5 to 50 parts by mass, based on 100 parts by mass of the mixture of the lignin component and the polyol.

When hydrofluoroolefin is used as the foaming agent, the amount of the hydrofluoroolefin is preferably 5 to 50 parts by mass, more preferably 10 to 30 parts by mass, based on 100 parts by mass of the mixture of the lignin component and the polyol.

In one embodiment, the polyurethane resin composition may further contain a foam stabilizer (surfactant).

Examples of the foam stabilizer (surfactant) include a silicon-based foam stabilizer, a fluorine-containing compound-based foam stabilizer, and the like.

Examples of the silicon-based foam stabilizer include a compound containing a block copolymer of dimethylpolysiloxane and polyether, and the like. Specific examples thereof include SZ-1671, SZ-1718, SH-193, SZ-1642, SF series No.193 manufactured by Dow Coming Toray Co., Ltd., L-6884, L-5440, L-5420 manufactured by Momentive Performance Materials Inc., B8443, B8490, B8460 manufactured by Evonik Industries AG, and the like.

The amount of the foam stabilizer is preferably 0.1 to 10 parts by mass, and more preferably 0.3 to 5 parts by mass, based on 100 parts by mass of the mixture of the lignin component and the polyol.

In one embodiment, the polyurethane resin composition may further contain a flame retardant.

Examples of the flame retardant include red phosphoru, a phosphate ester, a phosphate-containing flame retardant, a bromine-containing flame retardant, and a metal hydroxide.

Examples of the phosphate ester include triethylphosphate, tributylphosphate, trichloroethylphosphate, trichloropropylphosphate (abbreviated as TCPP), triphenylphosphate, tricresylphosphate, polyphosphate, and the like.

The amount of the flame retardant is preferably 10 to 60 parts by mass, more preferably 20 to 40 parts by mass, based on 100 parts by mass of the mixture of the lignin component and the polyol, from the viewpoint of obtaining excellent mechanical strength and flame retardancy when the polyurethane resin composition is used to produce polyurethane resin.

In addition to the above-mentioned additives, examples of the additive include a filler such as calcium carbonate and barium sulfate; an anti-aging agent such as an antioxidant and an ultraviolet absorber; a plasticizer, a colorant, an anti-fungal agent, an anti-foaming agent, a dispersant, a discoloration inhibitor, and the like. These may be used alone or in combination of two or more thereof.

The polyurethane resin composition may be a soft polyurethane resin composition, or may be a rigid polyurethane resin composition, and the thermosetting composition according to one embodiment of the present invention is more suitable for producing a rigid polyurethane resin composition.

### [Polyurethane resin]

The polyurethane resin according to one embodiment of the present invention is obtained by curing the above-described polyurethane resin composition of the present invention.

The polyurethane resin may be a soft polyurethane resin, or may be a rigid polyurethane resin, and the polyurethane resin composition according to one embodiment of the present invention is more suitable for producing a rigid polyurethane resin.

The method for producing a polyurethane resin of the present invention contains a step of reacting a lignin component, a polyol and isocyanate contained in the polyurethane resin composition of the present invention in the presence of a foam stabilizer, a catalyst and a foaming agent.

In one embodiment, the polyurethane resin may be produced by mixing the lignin component and the polyol at room temperature or at a temperature of 50°C to 150°C for 0.1 to 3 hours, followed by mixing isocyanate, a catalyst component, a flame retardant, a foaming agent, and the like.

In one embodiment, the density of the polyurethane resin may be 25.0 kg/m³ or higher and may be 70 kg/m³ or lower, for example.

In one embodiment, the compressive strength of the polyurethane resin may be 50 kPa or higher, and may be 500 kPa or lower.

The compressive strength is measured by the method described in Examples below.

### [Molded body]

A polyurethane molded body according to one embodiment of the present invention is obtained by molding the above-described polyurethane resin of the present invention.

The polyurethane molded body of the present invention can be used in an automobile component, a mechanical component, an industrial component, a household appliance component, a bedding or a furniture, an electric wire, a cable, a roll, a hose, a tube, a belt, a film, a sheet, a laminated article, a coating, an adhesive, a sealing material, a sporting good, a leisure good, a shoe-related component, a miscellaneous good, a nursing good, a medical application, a building material, a civil engineering application, a heat insulation material, a waterproofing material, a packaging material, a heat-keeping material, an ice pack, a slurry powder, a vibration absorber, and the like. In addition, a suitable surface material can be provided on one surface or both surfaces of the polyurethane molded body of the present invention. The surface material may be, for example, paper, wood, gypsum board, resin, aluminum foil, steel plate, or the like.

### Examples

### [Preparation of lignin component]

### Production Example 1

### (1) Extraction step

100 parts by mass (68 parts by mass as lignin) of the saccharification residue (the content of lignin: 68% by mass) of the non-food plant biomass, 245 parts by mass of the phenol, and 27 parts by mass of water were placed in an agitatable pressure-resistant container, and heated and stirred at 1.7 MPa and 220°C for 2 hours.

### (2) Purification step

### (2-1) Filtration

After diluting with acetone, the extract obtained in the above extracting step was placed in a pressure filter incorporating No.2 filter paper, pressurized to 0.1 to 0.4 MPa with compressed air or nitrogen, and filtered.

### (2-2) Distillation

The filtrate obtained in (2-1) above was distilled under reduced pressure (5 to 10 kPa) and heated (40 to 60°C) using an evaporator to remove acetone. In addition, phenol was removed by distillation under reduced pressure using an evaporator under reduced pressure (100 to 140°C).

### (2-3) Decompression to dryness

In order to remove the phenol remaining in the above (2-2), the product of distillation was dried in vacuo under reduced pressure (1.0 to 5.0 kPa) and heated at 120 to 150°C, and phenol was removed to obtain a lignin component (1).

### [Analysis of lignin component]

Regarding the lignin component (1) obtained in Production Example 1, and the lignin component (2) shown below, the following items (1) to (3) were evaluated.

Lignin component (2): Kraft lignin (Lignin, alkali manufactured by Sigma-Aldrich Co. LLC, product No. 370959)

### (1) The amount of phenol

The amount of phenol was determined using high performance liquid chromatography (HPLC). Specifically, 50 mg of sample of the lignin components (1) to (2) were each dissolved in 0.5 mL of tetrahydrofuran, 4.5 mL of a mixed solvent of 4/1 (volume ratio) of water/acetonitrile was added thereto, the mixture was stirred for 30 minutes, and the supernatant was filtered to prepare a measurement sample. 1 µL of the measurement sample was injected into "ACQUITY UPLC H-CLASS" to which a BEH C18 (1.7 µm x 2.1 mm x 50 mm) column was connected. The column temperature was set at 40°C, the mobile phase was a mixed solvent of 2 mM ammonium acetate aqueous solution (A) and acetonitrile (B), and the flow rate ratio (A:B) was gradually changed from 80:20 to 10:90 using a gradient method, and the measurement was performed using an ultraviolet-visible spectrum (UV) detector 280 nm as a detector. The amount of phenol in the sample was calculated from the calibration curve of a separately prepared standard phenol solution.

### (2) Dimer component (compound represented by formula (1) and compound (2))

The amount of the dimer component (phenol dimer and compound (2)) was determined using liquid chromatography/mass spectrometry (LC/MS). Specifically, 50 mg of sample of the lignin components (1) to (2) were each dissolved in 0.5 mL of tetrahydrofuran, 4.5 mL of a mixed solvent of 4/1 (volume ratio) of water/acetonitrile was added thereto, the mixture was stirred for 30 minutes, and the supernatant was filtered to prepare a measurement sample. 1 µL of the measurement sample was injected into LC-MS system in which a BEH C18 (1.7 µm x 2.1 mm x 50 mm) column was connected to "ACQUITY UPLC H-CLASS" and "Xevo G2-XS QTof" is equipped in the detector. The column temperature was set at 40°C, the mobile phase was a mixed solvent of 2 mM ammonium acetate aqueous solution (A) and acetonitrile (B), and the flow rate ratio (A:B) was gradually changed from 80:20 to 10:90 using a gradient method to separate the dimer component.

The resulting dimer component was ionized by electrospray and then measured using a negative mode quadrupole-time-of-flight mass spectrometer to measure the mass-to-charge ratio ranging from 50 to 1000.

Assuming that all of the compounds were detected in the deprotonated form, the structure of the dimer component contained in the sample was determined to be the following compounds (a) to (h) and compounds (2) from the mass-to-charge ratio. The chromatogram was extracted with a mass-to-charge ratio corresponding to the structure of each compound, and the peak area was calculated.

The amount of the phenol dimer component in the sample was calculated from a calibration curve of a separately prepared standard 2,2'-dihydroxydiphenylmethane solution.

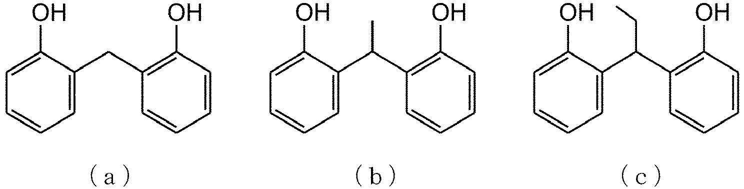

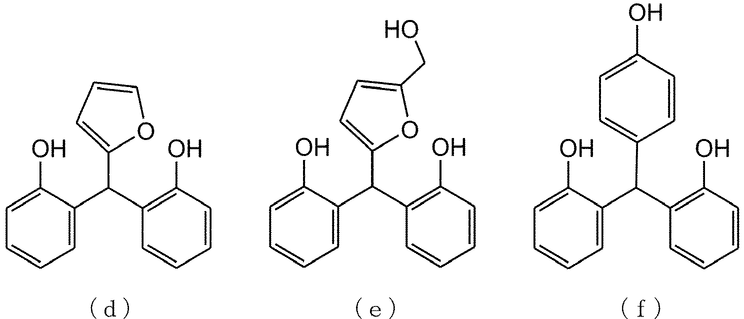

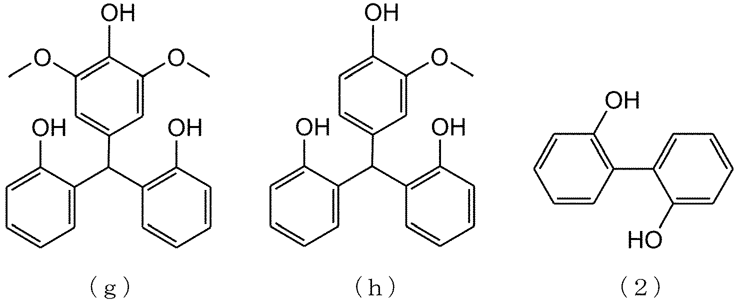

The evaluation results of the above (1) to (2) are shown in Table 1.

**Table 1**

| | Lignin component (1) | Lignin component (2) |
|---|---|---|
| Amount (% by mass) | | |
| Compound (a) | 0.210 | <0.001 |
| Compound (b) | 0.484 | <0.001 |
| Compound (c) | 0.024 | <0.001 |
| Compound (d) | 0.016 | 0.001 |
| Compound (e) | 0.005 | 0.003 |
| Compound (f) | 0.079 | 0.000 |
| Compound (g) | 0.024 | 0.046 |
| Compound (h) | 0.027 | 0.008 |
| Total amount of compounds (a) to (h) | 0.869 | 0.059 |
| Compound (2) | 0.002 | <0.001 |
| Free phenol monomer | 4.3 | 0.03 |
| Lignin | 94.8 | 99.9 |

The amount of "lignin" shown in Table 1 is a value calculated by deeming that all the components contained in the lignin components (1) and (2) other than the phenol dimer (compound (a) to (h)), compound (2), and free phenol monomer are lignin (the amount of lignin based on the total amount of the lignin component).

That is, in the following explanation, the "total amount of the lignin component" refers to the total amount of each of the amounts of phenol dimer (compounds (a) to (h)), compound (2), free phenol monomer, and lignin.

In addition, "total amount of compounds (a) to (h)" in Table 1 represents the amount ratio of the total amount of the compound represented by the formula (1) or (1') relative to the total amount of the lignin component (the total amount of the compound represented by the formula (1) or (1') based on the total amount of the lignin component).

### (3) GPC measurement of lignin component

The number-average molecular weight Mn, weight-average molecular weight Mw, Z-average molecular weight Mz and molecular weight distribution (Mw/Mn) were measured by gel permeation chromatography (GPC). Specifically, the sample of the lignin components (1) and (2) were each dissolved in tetrahydrofuran to prepare a measurement sample. 100 µL of the measurement sample was injected into a GPC system "HLC-8220GPC (manufactured by Tosoh Corporation)" or "HLC-8420GPC (manufactured by Tosoh Corporation)" in which two "TSKgelGMHXL (manufactured by Tosoh Corporation)" and one "G2000HXL (manufactured by Tosoh Corporation)" which are organic general-purpose columns filled with a styrene-based polymer filler were connected in series, and tetrahydrofuran as an eluent was developed at 1.0 mL/min and 40°C, and the retention time was measured using a differential refractive index (RI).

Each average molecular weight of the sample was calculated from a calibration curve showing the relationship between the retention time and the molecular weight of a separately prepared standard polystyrene.

Since some insoluble components were generated in tetrahydrofuran in the Kraft lignin of the lignin component (2), the soluble components were analyzed.

The following items (a) to (d) were calculated from the molecular weight charts of the samples determined by GPC.

### (a) Peak-maximum molecular weight LogM in the molecular weight LogM2.4 to 2.6 (Molecular weight LogM2.4 to 2.6 peak)

The value of the molecular weight LogM indicating the peak maximum value of the differential distribution value (dw/dLogM) in the molecular weight LogM2.4 to 2.6 of the chart of the molecular weight of the sample obtained by GPC (y-axis plots dw/dLogM and x-axis plots LogM) was defined as the "molecular weight LogM2.4 to 2.6 peak."

### (b) Maximum of differential distribution value (dw/dLogM)

In the chart of the molecular weight of the sample obtained by GPC (y-axis plots dw/dLogM and x-axis plots LogM), the maximum value of the peak of the differential distribution value (dw/dLogM) present in the molecular weight LogM2.4 to 2.6 was defined as the "maximum of differential distribution value (dw/dLogM)".

### (c) Integral distribution value (%) in molecular weight LogM2.4, integral distribution value (%) in molecular weight LogM2.55

In the chart of the molecular weight of the sample obtained by GPC (y-axis plots integral distribution value (%), x-axis plots LogM), the integral distribution value (%) in the molecular weight LogM2.4, and the integral distribution value (%) in the molecular weight LogM2.55 are defined as the "integral distribution value in molecular weight LogM2.4 " and "integral distribution value in molecular weight LogM2.55", respectively.

### (d) Integral distribution value (%) 2.55-2.4

The value of the difference obtained by subtracting the integral distribution value (%) of the molecular weight LogM2.4 from the integrated distribution value (%) of the molecular weight LogM2.55 was defined as "integral distribution value (%) 2.55-2.4."

Evaluation results are shown in Table 2.

**Table 2**

| | Lignin component (1) | Lignin component (2) |
|---|---|---|
| Mn | 750 | 1077 |
| Mw | 2120 | 2279 |
| Mz | 5385 | 4301 |
| Mw/Mn | 2.83 | 2.12 |
| Peak of molecular weight LogM2.4 to 2.6 | 2.5 | 2.5 |
| Maximum of differential distribution value (dw/dLogM) | 108.2 | 48.5 |
| Integral distribution value (%) in molecular weight LogM2.4 | 3.6 | 0.6 |
| Integral distribution value (%) in molecular weight LogM2.55 | 15.5 | 5.1 |
| Integral distribution value (%) 2.55-2.4 | 12.0 | 4.4 |

### [Thermosetting composition]

Examples 1 to 11 and Comparative Examples 1 to 8

### (1) Preparation of thermosetting composition

The aforementioned lignin components (1) to (2) and the polyol were mixed at the ratio shown in Tables 3 to 4, respectively, and the obtained mixture was heated to 130°C using a hot stirrer, and then stirred and mixed in a state of being kept at 130°C for 3 hours to obtain a thermosetting composition.

The numerical values in Tables 3 to 4 indicate the mass ratio (% by mass) of each component to the entire thermosetting composition. The "phenol dimer" in Tables 3 to 4 indicates the weight ratio (% by mass) of the total amount of the compounds (a) to (h) (compound represented by the formula (1) or formula (1')) contained in any of the lignin components (1) to (2) to the total amount of the thermosetting composition (the total amount of the compound represented by the formula (1) or formula (1')).

**Table 3**

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Curable composition | Lignin component [% by mass] | Lignin component (1) | 30 | 50 | 30 | 50 | 30 | 50 | 30 | 50 | 30 | 50 | 20 |
| | | Lignin component (2) | - | - | - | - | - | - | - | - | - | - | - |
| | Polyol [% by mass] | PPG400 | 70 | 50 | - | - | - | - | - | - | - | - | - |
| | | PPG700 | - | - | 70 | 50 | - | - | - | - | - | - | - |
| | | PPG300 triol | - | - | - | - | 70 | 50 | - | - | - | - | 20 |
| | | PPG700 triol | - | - | - | - | - | - | 70 | 50 | - | - | - |
| | | Maximol | - | - | - | - | - | - | - | - | 70 | 50 | 60 |
| | Phenol dimer [% by mass] | | 0.26 | 0.43 | 0.26 | 0.43 | 0.26 | 0.43 | 0.26 | 0.43 | 0.26 | 0.43 | 0.17 |
| Evaluation | Evaluation (1) | | A | A | B | B | A | A | B | B | A | B | A |
| | Evaluation (2) | | A | A | B | B | A | A | A | A | A | A | A |
| | Overall evaluation | | AA | AA | B | B | AA | AA | A | A | AA | A | AA |
| | Viscosity [mPa · s] | | | | | | 1790 | | 879 | | 5310 | | 8030 |

**Table 4**

| | | | Comp. Ex. | | | | | | | |
|---|---|---|---|---|---|---|---|---|---|---|
| | | | 1 | 2 | 3 | 4 | 5 | 6 | 7 | 8 |
| Curable composition | Lignin component [% by mass] | Lignin component (1) | - | - | - | - | - | - | - | - |
| | | Lignin component (2) | 30 | 50 | 30 | 50 | 30 | 50 | 30 | 50 |
| | Polyol [% by mass] | PPG400 | 70 | 50 | - | - | - | - | - | - |
| | | PPG700 | - | - | 70 | 50 | - | - | - | - |
| | | PPG300 triol | - | - | - | - | 70 | 50 | - | - |
| | | PPG700 triol | - | - | - | - | - | - | 70 | 50 |
| | | Maximol | - | - | - | - | - | - | - | - |
| | Phenol dimer [% by mass] | | 0.017 | 0.029 | 0.017 | 0.029 | 0.017 | 0.029 | 0.017 | 0.029 |
| Evaluation | Evaluation (1) | | C | C | C | C | B | C | C | C |
| | Evaluation (2) | | C | C | C | C | A | C | C | C |
| | Overall evaluation | | C | C | C | C | A | C | C | C |
| | Viscosity [mPa · s] | | | | | | | | | |

In Tables 3 and 4, the abbreviated names in the column of polyol indicate the following product names.
PPG400: "Polypropylene glycol 400" (manufactured by Junsei Chemical Co., Ltd.), weight-average molecular weight; 400
PPG700: "Polypropylene glycol 700" (manufactured by Junsei Chemical Co., Ltd.), weight-average molecular weight; 700
PPG300 triol: "Polypropylene glycol 300 (triol type)" (manufactured by FUJIFILM Wako Pure Chemical Corporation), weight-average molecular weight; 300
PPG700 triol: "polypropylene glycol 700 (triol type)" (manufactured by FUJIFILM Wako Pure Chemical Corporation), weight-average molecular weight; 700
Maximol: aromatic polyester polyol "Maximol (registered trademark) (MAXIMOL) (registered trademark)" (manufactured by Kawasaki Kasei Chemicals Ltd.)

### (2) Solubility evaluation of thermosetting composition

The following solubility evaluations (1) and (2) were conducted on the thermosetting compositions of Examples 1 to 11 and Comparative Examples 1 to 8.

Solubility evaluation (1): Each thermosetting composition was placed in a transparent container, and the state of the inner wall surface of the container and the state of the thermosetting composition were visually checked to evaluate the dissolution state of the lignin component in the polyol.

Solubility evaluation (2): Each thermosetting composition was applied to a glass slide, and the state of the coating liquid was visually checked to evaluate the state of dissolution of the lignin component in the polyol.

In the solubility evaluation (1) and (2), the solubility was evaluated on the following criteria. Evaluation results are shown in Table 3 to 4.

### (Solubility evaluation (1))

A: The lignin component was well dissolved, and residual melting on the inner wall surface of the container was not observed.
B: The lignin component was almost dissolved, and some residual melting on the inner wall surface of the container was observed.
C: The lignin component was hardly dissolved, and either the lignin component and the polyol were separated into two layers or the solid-state lignin component remained in the thermosetting composition.

### (Solubility evaluation (2))

A: The lignin component was well dissolved, and no turbidity was observed in the coating liquid.
B: The lignin component was almost dissolved, and a slight turbidity was observed in the coating liquid.
C: The lignin component was hardly dissolved, and an obvious turbidity in the coating liquid, the solid-state lignin component remained in the coating liquid, or the lignin component and the polyol were separated into two layers in the coating liquid.

### (Overall evaluation)

On the basis of the results of the solubility evaluations (1) and (2), the solubility was comprehensively evaluated.
AA: The best evaluation was obtained in both of the solubility evaluations (1) and (2).
A: A slightly inferior result was obtained in either the solubility evaluations (1) and (2), but no problem was confirmed in solubility.
B: Slightly inferior results were obtained in both of the solubility evaluations (1) and (2), but almost no problem was confirmed in solubility.
C: Results of poor solubility in both of the solubility evaluation (1) and (2) were obtained, and a state in which the lignin component was not dissolved was confirmed.

In Examples 1 to 11, it was confirmed that the lignin component was well dissolved in the polyol.

On the other hand, in Comparative Examples 1 and 3, the state in which the lignin component and the polyol were separated into two layers was confirmed in the solubility evaluation (1), and the state in which the coating liquid had a obvious turbidity was confirmed in the solubility evaluation (2).

In Comparative Examples 2, 4, and 6, the state in which the solid-state lignin component remained in the coating liquid was confirmed in both of the solubility evaluations (1) and (2).

In Comparative Examples 7 to 8, the state in which the lignin component and the polyol were separated into two layers was confirmed in both of the solubility evaluations (1) and (2).

### (3) Viscosity of thermosetting composition

The viscosity of the thermosetting compositions of Examples 1 to 11 and Comparative Examples 1 to 8 were measured by the following method. The measurement results are shown in Tables 3 and 4.

The blank space in the viscosity column in Tables 3 and 4 indicates that viscosity measurement is not conducted.

Viscosity measurement was conducted according to the B-type viscosity measurement JIS K7117-1. First, the lignin component and the polyol were mixed, and the obtained mixture was heated and stirred at 100°C for 30 minutes to obtain a mixture for viscosity measurement. Then, the mixture was allowed to stand in a water bath at 55°C for 30 minutes, and after the temperature of the mixture for viscosity measurement was stabilized at the measurement temperature, viscosity measurement was started. Viscosity measurement was conducted using "TVB22LT (manufactured by Toki Sangyo Co.,Ltd.)" as a measurement apparatus and an L-adapter (for low viscosity) as a rotor at rotational speed of 0.3 rpm and a measurement temperature of 55°C.

### [Polyurethane resin composition and molded body]

### (1) Preparation of polyurethane resin composition and production of rigid polyurethane resin Example 12

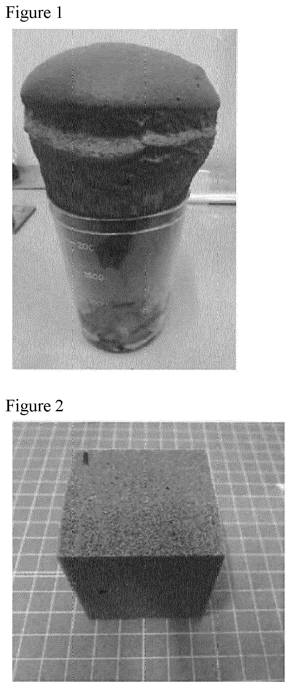

100 parts by mass of the thermosetting composition obtained in Example 11 and the components shown in Table 5 (catalyst, flame retardant, foam stabilizer, foaming aid, and foaming agent) were mixed at room temperature at the ratio shown in Table 5, and then isocyanate was mixed at the ratio shown in Table 5 to obtain a polyurethane resin composition. The obtained polyurethane resin composition was foamed in a container, and then heated in an oven at 50°C overnight to obtain a rigid polyurethane resin. A photograph of the appearance of the obtained rigid polyurethane resin is shown in Figure 1.

### Comparative Example 9

100 parts by mass of the thermosetting composition obtained by mixing only the polyol component at the ratio shown in Table 5 without blending the lignin component, and each component shown in Table 5 (catalyst, flame retardant, foam stabilizer, foaming aid, and foaming agent) were mixed at room temperature at the ratio shown in Table 5, and then isocyanate was mixed at the ratio shown in Table 5 to obtain a polyurethane resin composition. Thereafter, a rigid polyurethane resin was obtained in the same manner as in Example 12.

### (2) Production of polyurethane molded body

Each of the rigid polyurethane resins obtained in Example 12 and Comparative Example 9 was released from a container and cut out to obtain a polyurethane molded body. Figure 2 shows a photograph of the appearance of the polyurethane molded body obtained in Example 12.

**Table 5**

| | | | | Example 12 | Comp. Ex. 9 |
|---|---|---|---|---|---|
| Polyurethane resin composition | Curable composition | Lignin component (1) [parts by mass] | | 20 | 0 |
| | | Polyol component [parts by mass] | PPG300 triol | 20 | 20 |
| | | | Maximol | 60 | 80 |
| | | Phenol dimer [parts by mass] | | 0.17 | 0 |
| | Catalyst [parts by mass] | | Tertiary amine | 1 | 1 |
| | Flame retardant [parts by mass] | | Trichlorophosphate | 10 | 10 |
| | Foam stabilizer [parts by mass] | | Silicone-based surfactant | 1 | 1 |
| | Foaming aid [parts by mass] | | Water | 1 | 1 |
| | Foaming agent [parts by mass] | | Hydrofluoroolefin | 20 | 20 |
| | Isocyanate [NCO index] | | Polymeric MDI | 1.5 | 1.5 |
| Density [kg/m³] | | | | 37.7 | 39.1 |
| Compressive strength [kPa] | | | | 327 | 147 |
| Flammability: UL94 | | | | HF-1 | HF-1 |
| Flame burning time when contacting with flame for 60 seconds [s] | | | N=1 | 0 | 0 |
| | | | N=2 | 0 | 0 |
| | | | N=3 | 0 | 10 |
| | | | N=4 | 0 | 0 |
| | | | N=5 | 0 | 0 |

The product names of the products used as each component of the polyurethane resin composition shown in Table 5 are shown below.
Tertiary amine (catalyst): "TOYOCAT-RX5" (manufactured by Tosoh Corporation)
Trichlorophosphate (flame retardant): "TMCPP," trischloropropyl phosphate (DAIHACHI CHEMICAL INDUSTRY CO., LTD.)
Silicone-based surfactant (foam stabilizer): "SF Series No.193" (Dow Toray Co.,Ltd.)
Hydrofluoroolefin (foaming agent): "Opteon 1100" (manufactured by Chemours-Mitsui Fluoroproducts Co., Ltd.)
Polymeric MDI (isocyanate): "Millionate MR-200," polymeric diphenylmethane diisocyanate (MDI) (manufactured by Tosoh Corporation)

### (3) Density of rigid polyurethane resin

Each of the rigid polyurethane resins obtained in Example 12 and Comparative Example 9 was subjected to cutting, and a cubic test piece (block) having each side of 50 mm was cut out, and the density was calculated from the measured dimensions and masses of each test piece (block). The results are shown in Table 5.

In each of Example 9 and Comparative Example 12, a rigid polyurethane resin having a density of 35 kg/m³ or higher was obtained. Therefore, it was confirmed that a sufficient density was obtained in both the compressive strength test and the flammability test.

### (4) Compressive strength of rigid polyurethane resin

Compressive strength test was conducted according to JIS K7222. Firstly, the rigid polyurethane resins obtained in Example 12 and Comparative Example 9 were subjected to cutting, and a cubic test piece (blocked) having each side of 50 mm was cut out. Compressive strength was measured at a test speed of 5 mm/min on each obtained test piece (block) using a universal testing machine, Model 59R5582 (manufactured by Instron Japan Co., Ltd.). The results are shown in Table 5.

As shown in Table 5, the compressive strength of the rigid polyurethane resins obtained in Example 12 was improved by two times or more as compared with that of Comparative Example 9. This is considered to be because, in Example 12, the lignin component in the thermosetting composition is uniformly dissolved in the polyol, so that the lignin component and isocyanate reacted uniformly, resulting in increased compressive strength.

Thus, when the thermosetting composition of the present invention is used in a polyurethane resin composition, the lignin component contained in the thermosetting composition can be expected to react uniformly with isocyanate. Therefore, the thermosetting composition of the present invention can be suitably used for increasing the compressive strength of a polyurethane molded body.

### (5) Flammability test of rigid polyurethane resin

Flammability test was conducted according to UL94HBF. Firstly, rigid polyurethane resin was subjected to cutting, and 5 pieces of 150 mm x 50 mm x 10 mm test pieces (N = 1 to 5) were cut out, and flame contact test was conducted on each test piece.

Flame retardant performance level is shown in Table 5 as "HF-1>HF-2>HBF>Out of Rank."

Further, in the above-described flame contact test, the time in which the test piece was burned with flame when the test piece was contacted with flame for 60 seconds is shown in Table 5 as "flame burning time when contacting with flame for 60 seconds."

As shown in Table 5, with respect to the flame burning time when contacting with flame for 60 seconds, Comparative Example 9 had one flamed test piece, whereas Example 12 had no flamed test piece. From this result, it was confirmed that the rigid polyurethane resin of Example 12 had increased flame retardancy compared to that of Comparative Example 9.

### Industrial Applicability

The thermosetting composition of the present invention can be used in the production of polyurethane resin or molded body thereof, which is applied to an automobile component, a mechanical component, an industrial component, a household appliance component, a bedding or a furniture, an electric wire, a cable, a roll, a hose, a tube, a belt, a film, a sheet, a laminated article, a coating, an adhesive, a sealing material, a sporting good, a leisure good, a shoe-related component, a miscellaneous good, a nursing good, a medical application, a building material, a civil engineering application, a heat insulation material, a waterproofing material, a packaging material, a heat-keeping material, an ice pack, a slurry powder, a vibration absorber, and the like.

In addition, the thermosetting composition of the present invention can be used in applications where a surface material such as paper, wood, gypsum board, resin, aluminum foil, steel plate, or the like is provided on one or both surfaces thereof when the thermosetting composition is used to produce a polyurethane resin or a molded body.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. A thermosetting composition comprising a lignin component comprising two or more kinds of compounds represented by the following formula (1), and
a polyol,
wherein the amount of the lignin component is 0.1% by mass or more, and
the total amount of the compound is 0.06% by mass or more, based on the total amount of the lignin component: 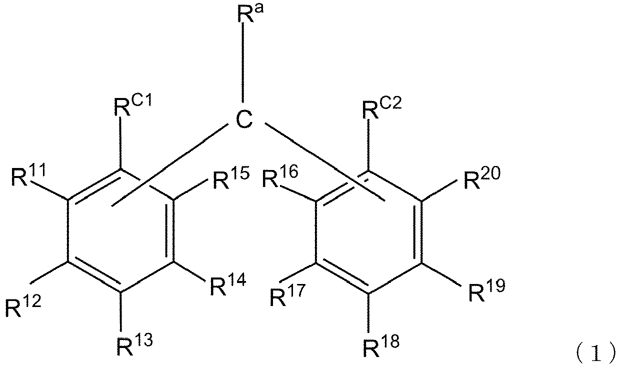 wherein in the formula, R^{a} is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.

2. A thermosetting composition comprising a lignin component comprising two or more kinds of compounds represented by the following formula (1'), and
a polyol,
wherein the total amount of the compound is 0.03% by mass or more: 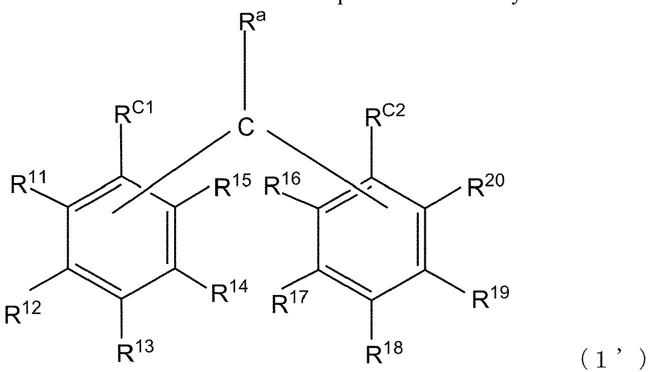
wherein in the formula, R is a hydrogen atom, a methyl group, an ethyl group, a furyl group, a hydroxymethylfuryl group, a hydroxyphenyl group, a hydroxymethoxyphenyl group or a hydroxydimethoxyphenyl group; R^{c1} and R^{c2} independently represent a hydroxyl group, an alkoxy group, an amino group or thiol group; R¹¹ to R²⁰ are independently a hydrogen atom, a hydroxyl group, a hydrocarbon group having 1 to 15 carbon atoms, a hydrocarbon ether group having 1 to 15 carbon atoms, or a group including a carbonyl group; each of R¹¹ to R²⁰ may be the same as or different from each other; pa carbonyl group; each of R¹¹ to R²⁰ may be the same as or different from each other; provided that at least one of R¹¹ to R¹⁵ is a hydrogen atom, and at least one of R¹⁶ to R²⁰ is a hydrogen atom.

3. A thermosetting composition comprising a lignin component and a polyol,
wherein a maximum value of a peak of a differential distribution value (dw/dLogM) present in a molecular weight LogM2.4 to 2.6 of the lignin component as measured by gel permeation chromatography (GPC) is 50 or more and 150 or less, or a difference of an integral distribution value (%) in a molecular weight LogM2.4 to 2.55 is 5 or more and 15 or less.

4. The thermosetting composition according to any one of claims 1 to 3, wherein the amount of the lignin component is 1 to 900 parts by mass based on 100 parts by mass of the polyol.

5. The thermosetting composition according to any one of claims 1 to 4, wherein the weight-average molecular weight of the polyol is 200 to 8000.

6. The thermosetting composition according to any one of claims 1 to 5, wherein the polyol is one or more selected from the group consisting of an aromatic polyol, an alicyclic polyol, an aliphatic polyol, a polylactone polyol, a polycarbonate polyol, a polyester polyol, a polyether polyol and a polymer polyol.

7. The thermosetting composition according to any one of claims 1 to 6, wherein the polyol is one or more selected from the group consisting of polyethylene glycol, polypropylene glycol, and a polyester polyol.

8. The thermosetting composition according to any one of claims 1 to 7, wherein the weight-average molecular weight (Mw) of the lignin component is 1,000 to 3,000.

9. The thermosetting composition according to any one of claims 1 to 8, wherein the molecular weight-distribution (Mw/Mn) of the lignin component is 2.2 to 3.5.

10. The thermosetting composition according to any one of claims 1 to 9, wherein the amount of the following compound (2) is 0.1% by mass or less.

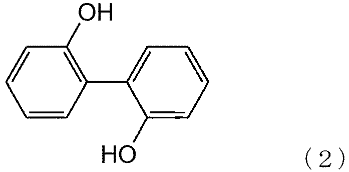

11. The thermosetting composition according to any one of claims 1 to 10, wherein the amount of a free phenol monomer is 0.02% by mass or more and 8.0% by mass or less.

12. A polyurethane resin composition comprising the thermosetting composition according to any one of claims 1 to 11 and isocyanate.

13. The polyurethane resin composition according to claim 12, wherein the polyurethane resin composition is a rigid polyurethane resin composition.

14. The polyurethane resin composition according to claim 12 or 13, which comprises one or more additives selected from the group consisting of red phosphorus, a phosphate ester, a phosphate-containing flame retardant, a bromine-containing flame retardant, and a metal hydroxide.

15. A polyurethane molded body obtained by curing the polyurethane resin composition according to any one of claims 12 to 14.
